# EUROPÄISCHE PATENTSCHRIFT

(11) **EP 0 993 736 B1**
(45) Veröffentlichungstag und Bekanntmachung des Hinweises auf die Patenterteilung: **20.06.2001**
(21) Anmeldenummer: 97938906.1
(22) Anmeldetag: 14.08.1997
(51) Int. Cl.: H04N 5/20, H04N 5/243

(54) **VORRICHTUNG UND VERFAHREN ZUM ERFASSEN EINES OPTISCHEN SIGNALS**
METHOD AND DEVICE FOR DETECTING AN OPTICAL SIGNAL
PROCEDE ET DISPOSITIF POUR DETECTER UN SIGNAL OPTIQUE

(30) Priorität: 07.07.1997 DE 19728886
(43) Veröffentlichungstag der Anmeldung: 19.04.2000
(73) Patentinhaber: FRAUNHOFER-GESELLSCHAFT ZUR FÖRDERUNG DER ANGEWANDTEN FORSCHUNG E.V., 80636 München (DE)
(72) Erfinder: SCHANZ, Michael, D-46147 Oberhausen (DE); HOSTICKA, Bedrich, D-47058 Duisburg (DE); NITTA, Christian, D-47169 Duisburg (DE)
(74) Vertreter: Schoppe, Fritz, Dipl.-Ing.
(86) Internationale Anmeldenummer: EP9704453
(87) Internationale Veröffentlichungsnummer: WO9903261

(56) Entgegenhaltungen:
- EP-A- 0 135 035
- EP-A- 0 711 034
- PATENT ABSTRACTS OF JAPAN vol. 013, no. 268 (E-775), 20.Juni 1989 & JP 01 057813 A (NEC CORP), 6.März 1989,
- PATENT ABSTRACTS OF JAPAN vol. 016, no. 465 (E-1270), 28.September 1992 & JP 04 165822 A (TOSHIBA CORP), 11.Juni 1992,
- RUSCAK S: "MAXIMIZE DYNAMIC RANGE IN CCD-BASED IMAGING SYSTEMS" EDN ELECTRICAL DESIGN NEWS, Bd. 39, Nr. 22, 27.Oktober 1994, NEWTON, (US), Seiten 101-104, 106, 108, XP000493483

## Beschreibung

Die vorliegende Erfindung bezieht sich auf eine Vorrichtung und ein Verfahren zum Erfassen von optischen Signalen und insbesondere auf eine Vorrichtung und ein Verfahren zum Umwandeln eines optischen Signals in ein elektrisches Signal und zum Auslesen des umgewandelten elektrischen Signals.

Optische Signale werden beispielsweise mittels integrierter Bildsensoren, die in MOS-Technologie hergestellt sind, erfaßt. Dabei ist auf einem integrierten Schaltkreis, einem IC (IC = Integrated Circuit), eine Anzahl von Bildsensorelementen zusammen mit weiterer Elektronik integriert. Die Anzahl und die Anordnung der Bildelemente können dabei variiert werden. Beispielsweise existieren eindimensionale Arrays, zweidimensionale Arrays oder Einzelsensoren.

Mittels der CMOS-Technologie sind beispielsweise verschiedene Bildsensorelemente realisierbar. Beispiele sind Photodioden, parasitäre Bipolar-Transistoren, Photogates und photoempfindliche MOSFETs.

Um die Bildinformationen außerhalb des integrierten Schaltkreises weiteren Komponenten eines Gesamtsystems zugänglich zu machen, muß das Ausgangssignal des Bildsensorelements, bzw. die Ausgangssignale der Mehrzahl von Bildsensorelementen, zunächst ausgelesen und dann gegebenenfalls in geeigneter Weise aufbereitet werden. Im Zuge einer derartigen Aufbereitung wird beispielsweise eine Verstärkung, eine Impedanzwandlung oder eine Kennlinienkompression bezüglich des Ausgangssignals des Bildsensorelements durchgeführt.

Das "Auslesen" bedeutet dabei, daß das Ausgangssignal des Bildsensorelements einer Schaltung in der Peripherie des Bildsensorelements oder des Bildsensor-Arrays zugänglich gemacht wird. Bei einer derartigen Ausleseschaltung ist im allgemeinen eine größere Chipfläche auf dem integrierten Schaltkreis verfügbar als innerhalb des Bildsensor-Arrays. Die Ausleseschaltung greift über eine Verbindungsleitung für das Ausgangssignal und gegebenenfalls eine oder mehrere Steuersignale zu dem Bildsensorelement auf das durch das Bildsensorelement erzeugte elektrische Signal zu. Ferner ist bekannt, daß, wenn das Auslesen aller Bildsensorelemente nicht gleichzeitig stattfindet, jedes Bildsensorelement einen Auswahlschalter aufweist, um somit alle Bildsensorelemente eines Arrays auslesen zu können.

Gemäß dem Stand der Technik wird auf die von den integrierten Bildsensorelementen erzeugten Signale unter Verwendung von geeigneten Ausleseschaltungen zugegriffen, wobei in den Ausleseschaltungen eine Verstärkung der Signale stattfindet. Dem Ausgangssignal von Bildsensorelementen ist stets ein Rauschanteil überlagert. Durch den Zugriff der Ausleseschaltung addieren sich dazu weitere Rauschanteile. Es ist wünschenswert, daß diese weiteren Rauschanteile möglichst klein gehalten werden, so daß der zusätzliche Rauschanteil bezüglich des gesamten Rauschanteils einen geringeren Teil ausmacht. Wenn nämlich der zusätzliche Rauschanteil bezüglich des gesamten Rauschanteils dominant wird, verringert dies die Qualität der Beleuchtungsinformationen, die der integrierte Bildsensor ausgibt. Dies gilt insbesondere für kleine Signale, also für eine Beleuchtung mit einer geringen Helligkeit.

Die Ausleseschaltungen von Bildsensorelementen sowie weitere nachfolgende Schaltungen, wie z.B. Treiber, tragen immer zum gesamten Rauschanteil bei. Dieser Rauschanteil der Ausleseschaltung oder der weiteren Schaltungen kann nur durch einen erhöhten Aufwand des Entwurfs des integrierten Schaltkreises gering gehalten werden. Jedoch ist, insbesondere bei zweidimensionalen Arrays von Bildsensorelementen, im allgemeinen die auf dem integrierten Schaltkreis zur Verfügung stehende Chipfläche begrenzt, so daß der Rauschanteil der Ausleseschaltung bezüglich des gesamten Rauschanteils nicht beliebig gering gehalten werden kann.

Es ist bekannt, außerhalb eines integrierten Schaltkreises eine automatische Verstärkungsumschaltung für das ausgelesene Signal bereitzustellen, um eine Dynamik- bzw. Auflösungs-Vergrößerung eines analogen Signals, das nachfolgend von einem A/D-Wandler umgesetzt wird, zu bewirken. Diese automatische Verstärkungsumschaltung trägt jedoch nicht dazu bei, das Signal-Rausch-Verhältnis zu vergrößern, da sämtliche Rauschanteile, die von der Ausleseschaltung erzeugt werden, ebenfalls von der automatischen Verstärkungsumschaltung betroffen sind.

Die EP 0 135 035 A beschreibt ein Verfahren zur Verbesserung der Qualität eines Fernsehbildes, bei dem durch eine höhere Verstärkung von dunklen Bildpartien eine Verbesserung der Bildqualität erreicht werden soll. Das Fernsehbild wird dann entsprechend der Verstärkung, d.h. einer stärkeren Verstärkung für dunkle Bildpartien und einer geringeren Verstärkung für helle Bildpartien, auf einem Bildschirm angezeigt.

Die Patent Abstracts of Japan, Vol. 30, Nr. 268 (E-775), 20. Juni 1989 (s. a. JP-A-1 057 813, veröffentlicht am 6. März 1989), offenbaren einen Verstärker mit einstellbarer Verstärkung, bei dem die Verstärkung in Stufen abhängig von dem Pegel des Eingangssignals eingestellt wird. Die Patent Abstracts of Japan, Vol. 016, Nr. 465 (E1270), 28. September 1992 (s. a. JP-A-4 165 822, veröffentlicht am 11. Juni 1992), offenbaren einen Analog/Digitalwandler unter Verwendung eines einstellbaren Verstärkers, um ungeachtet einer Eingangssignalamplitude eine feste Auflösung zu erhalten.

Die Electrical Design News 39 (1994), Okt. 27, No. 22, Newton, Mass., US, S. 101-108 offenbaren einen Vorverstärker für abgefastete signale eines Bildsensors, mit einer mittels externer Steuersignale in Stufen einstellbaren verstärkung. Die Vorrichtung dient dem Ziel, den Dynamikbereich nachfolgender Verarbeitungsstufen optimal auszunutzen und so den Rauscheinfluß gering zu halten.

Die Aufgabe der vorliegenden Erfindung besteht darin, eine Vorrichtung und ein Verfahren zum Erfassen von optischen Signalen zu schaffen, die Ausgangssignale mit einem erhöhten Signal-Rausch-Verhältnis aufweisen.

Diese Aufgabe wird durch eine optische Erfassungsvorrichtung gemäß Anspruch 1 sowie ein Verfahren zum Erfassen eines optischen Signals gemäß Anspruch 6 gelöst.

Die vorliegende Erfindung basiert darauf, eine automatische Verstärkungsumschaltung während des Auslesevorgangs, also beim direkten Zugriff auf das Bildsensorelement durchzuführen. Dadurch können die Einflüsse der Rauschanteile der Ausleseschaltung und aller weiteren Schaltungen, wie z.B. von Treibern, die das Ausgangssignal der Ausleseschaltung analog weiterverarbeiten, durch die automatische Verstärkungsumschaltung beim direkten Zugriff auf das Bildsensorelement verringert werden.

Wird das Ausgangssignal des Bildsensorelements für kleine Signale, also für geringe Helligkeiten der Beleuchtung, höher verstärkt als für große Signale, bevor es zu der Ausleseschaltung gelangt, so vergrößert sich das Verhältnis von Signalanteil zu gesamtem Rauschanteil am Ausgang der Ausleseschaltung. Dabei wird zwar der Rauschanteil des Ausgangssignals vom Bildsensorelement ebenso wie der Signalanteil desselben verstärkt, jedoch verringert sich das Verhältnis vom Rauschanteil der Ausleseschaltung zum Rauschanteil des Bildsensorelements, da der Rauschanteil der Ausleseschaltung nicht verstärkt wird. Somit erhält man eine verbesserte Qualität der Beleuchtungsinformationen am Ausgang der Ausleseschaltung, d.h. das Signal-Rausch-Verhältnis des Ausgangssignals der Ausleseschaltung ist verbessert.

Die vorliegende Erfindung kann zusammen mit allen bekannten Bildsensorelementen, beispielsweise solchen, die in CMOS-Technologie hergestellt sind, wie z.B. Photodioden, parasitären Bipolar-Transistoren, Photogates und photoempfindlichen MOSFETs, verwendet werden. Ferner kann die vorliegende Erfindung für beliebige Variationen von Anzahl und Anordnung der Bildelemente, beispielsweise eindimensionale Arrays, zweidimensionale Arrays oder Einzelsensoren, verwendet werden. Der Zugriff auf die einzelnen Bildsensorelemente kann dabei in bekannter Weise, beispielsweise durch Auswahlschalter, realisiert werden.

Bevorzugte Ausführungsbeispiele der vorliegenden Erfindung werden nachfolgend bezugnehmend auf die beiliegenden Zeichnungen näher erläutert. Es zeigen:
- Fig. 1: eine schematische Darstellung eines Ausführungsbeispiels der erfindungsgemäßen Vorrichtung;
- Fig. 2: eine detailliertere Darstellung eines bevorzugten Ausführungsbeispiels der vorliegenden Erfindung; und
- Fig. 3: ein beispielhaftes Diagramm einer Kennlinie der Ausgangsspannung eines Ausführungsbeispiels der erfindungsgemäßen Vorrichtung über einer normierten Beleuchtungsstärke.

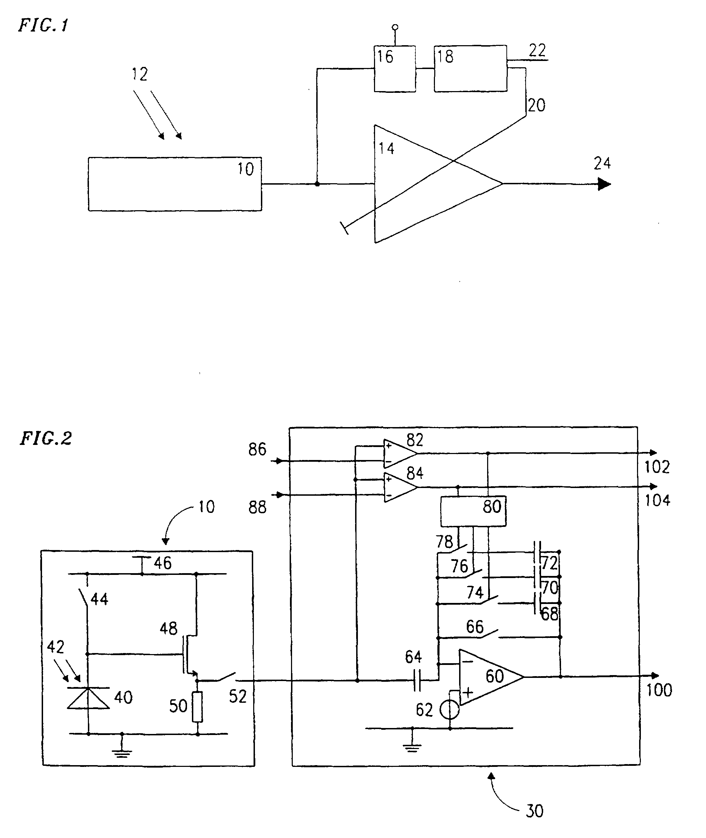

Bezugnehmend auf Fig. 1 werden nachfolgend die Grundsätze eines bevorzugten Ausführungsbeispiels der vorliegenden Erfindung erläutert, während im Anschluß bezugnehmend auf Fig. 2 eine detaillierte Erläuterung eines bevorzugten Ausführungsbeispiels der vorliegenden Erfindung durchgeführt wird.

In Fig. 1 ist bei 10 ein Bildsensorelement schematisch dargestellt. Auf das Bildsensorelement fällt beispielsweise eine Beleuchtung 12 ein. Die Ausgangsleitung des Bildsensorelements 10 ist zum einen mit dem Eingang eines Ausleseverstärkers 14 verbunden. Zum anderen ist der Ausgang des Bildsensorelements 10 mit dem Eingang einer Verstärkungseinstellschaltung, die bei dem dargestellten Ausführungsbeispiel aus einem Analog/Digital-Wandler 16 und einem Codierer 18 besteht, verbunden. Der Codierer 18 erzeugt an einem seiner Ausgänge 20 ein Signal abhängig von der Größe des von dem Bildsensorelement ausgegebenen Signals, wobei auf der Basis des von dem Codierer 18 ausgegebenen Signals die Verstärkung des Ausleseverstärkers 14 eingestellt wird. Der Codierer 18 erzeugt an einem weiteren seiner Ausgänge 22 ferner ein Signal, das die an dem Ausleseverstärker 14 eingestellte Verstärkung anzeigt.

Das Bildsensorelement 10 wandelt die auf denselben einfallende Beleuchtung 12 in ein elektrisches Ausgangssignal um. Dieses beleuchtungsabhängige Ausgangssignal gelangt zum Ausleseverstärker 14. Bevor jedoch die eigentliche Verstärkung vorgenommen wird, wird von einem Analog/Digital-Wandler 16, der beispielsweise durch Fensterkomparatoren gebildet ist, der Spannungsbereich festgelegt, in dem das Ausgangssignal des Bildsensorelements 10 liegt. Der Analog/Digital-Wandler 16 erzeugt nun aus dem festgestellten Spannungsbereich mit Hilfe des digitalen Codierers 18 die digitalen Informationen für die Verstärkung. Die Verstärkungsumschaltung, d.h. die Einstellung der Verstärkung für den Ausleseverstärker 14 erfolgt somit automatisch. Die Beleuchtungsinformationen, die durch das verstärkte Ausgangssignal des Bildsensorelements 10 dargestellt sind, können nun ausgegeben werden. Um die an dem Ausgang 24 ausgegebenen Beleuchtungsinformationen richtig interpretieren zu können, ist es dabei notwendig, die gewählte Verstärkung zu kennen. Zu diesem Zweck werden die Informationen bezüglich der eingestellten Verstärkung an dem Ausgang 22 des Codierers 18 ausgegeben.

In Fig. 2 ist ein bevorzugtes Ausführungsbeispiel der vorliegenden Erfindung detaillierter dargestellt. Die linke Umrandung in Fig. 2 stellt das Bildsensorelement 10 dar, während die rechte Umrandung eine Ausleseschaltung einfaßt, die allgemein mit dem Bezugszeichen 30 bezeichnet ist.

Das Bildsensorelement 10 besteht bei dem dargestellten Ausführungsbeispiel aus einer Photodiode 40, die beispielsweise mit einer Beleuchtung 42 beaufschlagbar ist. Der n-dotierte Anschluß der Photodiode 40 ist mit einem Schalter 44 verbunden. Der andere Anschluß des Schalters 44 ist mit einer positiven Versorgungsspannung 46, die beispielsweise 5 Volt beträgt, verbunden. Der zweite Anschluß der Photodiode 40 ist mit Masse verbunden. Der n-dotierte Anschluß der Photodiode 40 ist ferner mit der Gate-Elektrode eines Feldeffekttransistors 48 verbunden, dessen Drain-Elektrode mit der positiven Versorgungsspannung 46 und dessen Source-Elektrode mit dem ersten Anschluß einer Impedanz 50 verbunden ist. Der zweite Anschluß der Impedanz 50 ist mit Masse verbunden. Ein Schalter 52 ist mit dem Verbindungspunkt zwischen dem Feldeffekttransistor 48 und der Impedanz 50 verbunden.

Der Feldeffekttransistor 48 und die Impedanz 50 stellen einen Sourcefolger dar, um die Spannung an dem n-dotierten Anschluß der Photodiode 40 zu puffern.

Im folgenden wird nun kurz die Erzeugung des beleuchtungsabhängigen Ausgangssignals des Bildsensorelements 10 beschrieben. Zu Beginn wird der n-dotierte Anschluß der Photodiode 40 durch das Schließen des Schalters 44 mit der Versorgungsspannung 46 kurzgeschlossen. Nachfolgend wird der Schalter 44 wieder geöffnet. Das Potential des n-dotierten Anschlusses der Photodiode 40 sinkt wegen des fließenden Photostroms durch die Photodiode mit der Zeit ab. Je größer die Beleuchtung 42 ist, desto größer ist der zeitabhängige Potentialabfall. Die Spannung an dem n-dotierten Anschluß der Photodiode 40 wird wie oben erwähnt durch die Sourcefolgerschaltung 48, 50 gepuffert.

Nach dem Verstreichen einer bestimmten Zeit erfolgt der Zugriff auf das Bildsensorelement durch den Schalter 52. Durch den Sourcefolger ist die Zugriffsgeschwindigkeit erhöht. Während der gesamten Zugriffszeit bleibt der Schalter 52 geschlossen.

Die Ausleseschaltung 30 umfaßt einen Operationsverstärker 60. Der Arbeitspunkt des Operationsverstärkers 60 wird bei dem dargestellten Ausführungsbeispiel über eine Spannungsquelle 62 eingestellt. Der invertierende Eingang des Operationsverstärkers 60 ist über einen Kondensator 64 mit dem zweiten Anschluß des Schalters 52 verbunden. Der Ausgang des Operationsverstärkers 60 ist über einen Schalter 66 direkt an den invertierenden Eingang desselben rückkoppelbar. Der Ausgang des Operationsverstärkers 60 ist ferner über Kondensatoren 68, 70 und 72 sowie Schalter 74, 76 und 78 mit dem invertierenden Eingang desselben verbindbar.

Die Schalter 74, 76, 78 sind über einen Codierer 80, der zu diesem Zweck bei diesem Ausführungsbeispiel drei Ausgänge aufweist, ansteuerbar. Der Codierer 80 weist bei dem dargestellten Ausführungsbeispiel zwei Eingänge auf, die mit den Ausgängen zweier Fensterkomparatoren 82, 84 verbunden sind. Die invertierenden Eingänge der Fensterkomparatoren 82 und 84 sind mit voreingestellten Spannungen 86 bzw. 88 beaufschlagt. Zu den nicht-invertierenden Eingängen der Fensterkomparatoren 82, 84 wird über den Schalter 52 das beleuchtungsabhängige Ausgangssignal des Bildsensorelements 10 gekoppelt. Die Fensterkomparatoren 82, 84 stellen eine Analog/Digital-Wandler-Vergleichseinrichtung dar.

Das Ausgangssignal, das das verstärkte beleuchtungsabhängige Signal des Bildsensorelements 10 darstellt, kann an einem Ausgang 100 des integrierten Schaltkreises entnommen werden. Ausgänge 102, 104 des integrierten Schaltkreises sind mit den Ausgängen der Fensterkomparatoren 82, 84 verbunden und dienen dazu, die für den Ausleseverstärker eingestellte Verstärkung anzuzeigen.

Zu Beginn eines Auslesevorgangs muß der Operationsverstärker 60, dessen Arbeitspunkt über die Spannungsquelle 62 eingestellt ist, mit dem Schalter 66 rückgekoppelt werden. Während dieser Zeit vergleichen die Fensterkomparatoren 82, 84 die Ausgangsspannung des Bildsensorelements 10 mit den vorgegebenen Spannungen 86, 88, die die Umschaltschwellen zum Umschalten der Verstärkung darstellen und beispielsweise extern eingespeist werden können. Die vorgegebenen Spannungen 86 und 88 können beispielsweise 0,7 V und 1,4 V betragen. Abhängig von dem Vergleich des Ausgangssignals des Bildsensorelements 10 mit den vorgegebenen Spannungen 86 und 88 wird über das Codierernetzwerk 80 einer der Kondensatoren 68, 70, 72 durch das Schließen von einem der Schalter 74, 76, 78 in den Rückkopplungsweg des Operationsverstärkers 60 geschaltet. Dabei wird der Schalter 66 geöffnet. Die Kondensatoren 68, 70 und 72 weisen unterschiedliche Kapazitätswerte auf, um dadurch die Realisierung unterschiedlicher Verstärkungen des Operationsverstärkers 60 zu ermöglichen. Nach dem Öffnen des Schalters 66 stellt sich am Ausgang der Ausleseschaltung, d.h. an dem Ausgang 100, ein Spannungswert ein, der die Ausgangsspannung des Bildsensorelements 10 um den Faktor des Kapazitätswerts des Kondensators 64 dividiert durch den Kapazitätswert des ausgewählten der Kondensatoren 68, 70 und 72 verstärkt. Es ist offensichtlich, daß die Kondensatoren 68, 70 und 72 je nach gewünschter Verstärkung dimensioniert sind. Dabei müssen für hohe Verstärkungen kleinere Kapazitätswerte der Kondensatoren 68, 70 und 72 als Kapazitätswert des Kondensators 64 gewählt werden, während für niedrige Verstärkungen entsprechend höhere Kapazitätswerte zu wählen sind.

Die Funktionalität der SC-Verstärkerschaltung (SC = Switched Capacitors) ergibt sich aus der Anordnung des Operationsverstärkers 60, der Schalter 66, 74, 76, 78 sowie den Kapazitäten 64, 68, 70 und 72. Die Anzahl der Stufen für die Verstärkungsumschaltung ist ebenso frei wählbar wie die Spannungswerte der Umschaltschwellen. Bei dem dargestellten Ausführungsbeispiel liegen drei unterschiedliche Verstärkungen mit zwei Umschaltschwellen, den vorgegebenen Spannungen 86 und 88, vor.

Es ist für Fachleute offensichtlich, daß das bezugnehmend auf die Fig. 1 und 2 beschriebene bevorzugte Ausführungsbeispiel der vorliegenden Erfindung ausschließlich veranschaulichenden Zwecken dient, wobei beliebige Operationsverstärker mit variabler Verstärkung verwendet werden können. Ferner kann gemäß der vorliegenden Erfindung eine beliebige Verstärkungseinstellvorrichtung verwendet werden, die in der Lage ist, das unverstärkte Ausgangssignal eines Bildsensorelements zu erfassen und auf der Basis der Größe desselben die Verstärkung des Ausleseverstärkers einzustellen.

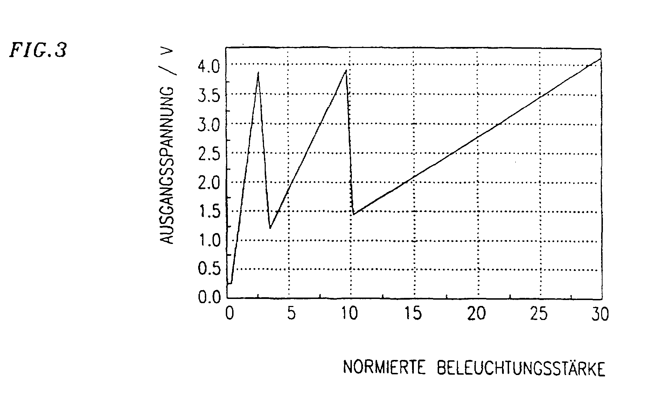

Fig. 3 zeigt für das in Fig. 2 konkret dargestellte Schaltungsbeispiel der automatischen Verstärkungsumschaltung die Kennlinie des Ausgangsspannungshubs in Volt über einer normierten Beleuchtungsstärke. Bei der Darstellung von Fig. 3 wurde für kleine Signale, d.h. eine Ausgangsspannung des Bildsensorelements von weniger als 0,7 V eine Verstärkung von 12 gewählt. Für mittlere Signale, d.h. 0,7 V < Ausgangsspannung des Bildsensorelements < 1,4 V, wurde eine Verstärkung von 3 gewählt, während für Ausgangssignale des Bildsensorelements mit einer Spannung von mehr als 1,4 V eine Verstärkung von 1 gewählt wurde.

Es ist für Fachleute offensichtlich, daß die Grundsätze der vorliegenden Erfindung auf eine Vielzahl von Bildsensorelementen, die eine Beleuchtung in ein elektrisches Signal umwandeln, anwendbar ist. Ferner ist die vorliegende Erfindung auf eindimensionale oder zweidimensionale Arrays solcher Bildsensorelemente anwendbar, wobei in bekannter Weise Auswahlschalter zum Zugreifen auf die einzelnen Bildsensorelemente vorgesehen sein können. Indem gemäß der vorliegenden Erfindung die Verstärkung des Ausleseverstärkers abhängig von dem unverstärkten Ausgangssignal eines Bildsensorelements eingestellt wird, schafft dieselbe ein Ausgangssignal der Ausleseschaltung mit einem hohen Signal-Rausch-Verhältnis. Durch den einfachen Aufbau können gemäß der vorliegenden Erfindung Bildsensorelemente und Ausleseschaltungen ohne weiteres auf einem integrierten Schaltkreis mit begrenzter Chipfläche realisiert sein.

## Patentansprüche

1. Optische Erfassungsvorrichtung mit folgenden Merkmalen:
zumindest einem Bildsensorelement (10), das abhängig von einer auf dasselbe auftreffenden Beleuchtung (12) ein Bildsensorelement-Ausgangssignal erzeugt;
einem Ausleseverstärker (14; 60), der zwischen einer Mehrzahl von Verstärkungsstufen umschaltbar ist, für das oder jedes Bildsensorelement (10) zum Verstärken des jeweiligen Bildsensorelement-Ausgangssignals;
einer Verstärkungsumschaltvorrichtung (16, 18, 20) zum Vergleichen des Bildsensorelement-Ausgangssignals vor dem Verstärken desselben durch den Ausleseverstärker (14; 60) mit zumindest einem vorgegebenen Schwellenwert (86, 88) und zum Umschalten zwischen den Verstärkungsstufen des Ausleseverstärkers (14; 60) abhängig von dem Ergebnis des Vergleichs; und
einem ersten Ausgangssignal (24; 100), das das verstärkte Bildsensorelement-Ausgangssignal darstellt, und einem zweiten Ausgangssignal (22; 102, 104), das die Verstärkungstufe, auf die der Verstärker umgeschaltet ist, anzeigt.

2. Optische Erfassungsvorrichtung gemäß Anspruch 1, bei der das Bildsensorelement (10), der Ausleseverstärker (14; 60) und die Verstärkungsumschaltvorrichtung (16, 18, 20) in einem integrierten Schaltkreis integriert sind.

3. Optische Erfassungsvorrichtung gemäß Anspruch 1 oder 2, bei der die Verstärkung des Ausleseverstärkers durch das Schalten von Kondensatoren (68, 70, 72) mit unterschiedlichen Kapazitätswerten in den Rückkopplungsweg des Ausleseverstärkers (60) umschaltbar ist.

4. Optische Erfassungsvorrichtung gemäß einem der Ansprüche 1 - 3, bei der die Verstärkungsumschaltvorrichtung einen Analog/Digital-Wandler (16; 82, 84) und eine Codiervorrichtung (18; 80) aufweist, wobei die Codiervorrichtung (18; 80) das Umschalten der Verstärkung des Ausleseverstärkers (14; 60) bewirkt.

5. Verfahren zum Erfassen eines optischen Signals mit folgenden Schritten:
Umwandeln des optischen Signals in ein elektrisches Signal mittels eines Bildsensorelements (10);
Vergleichen des elektrischen Signals mit zumindest einem Schwellenwert (86, 88);
Umschalten der Verstärkung eines Ausleseverstärkers (14; 60) zwischen einer Mehrzahl von Verstärkungsstufen abhängig von dem Ergebnis des Vergleichs;
Verstärken des elektrischen Signals entsprechend der Verstärkungsstufe, auf die umgeschaltet ist, zum Erzeugen eines verstärkten elektrischen Signals; und
Ausgeben eines ersten Ausgangssignals (24; 100), das das verstärkte elektrische Signal darstellt, und eines zweiten Ausgangssignals (22; 102, 104), das die Verstärkungsstufe, auf die der Verstärker umgeschaltet ist, anzeigt.

6. Verfahren nach Anspruch 5, bei dem mit abnehmenden elektrischen Signalen, die durch das Bildsenorselement (10) erzeugt werden, zu Verstärkungsstufen mit höherer Verstärkung umgeschaltet wird.

## Claims

1. An optical detector comprising:
at least one image sensor element (10), which generates an image sensor element output signal according to the illumination (12) incident on said element;
a readout amplifier (14; 60) switchable between a plurality of amplification stages for the one or each image sensor element (10) for amplifying the respective image sensor element output signal,
an amplification switch (16, 18, 20) for comparing the image sensor element output signal with at least one given threshold value (86, 88) before said signal is amplified by the readout amplifier (14; 60) and for switching between the amplification stages of the readout amplifier (14; 60) depending on the result of the comparison; and
a first output signal (24; 100) indicating the amplified image sensor element output signal and a second output signal (22; 102, 104) indicating the amplification stage to which the amplifier is switched.

2. An optical detector according to claim 1, wherein the image sensor element (10), the readout amplifier (14; 60) and the amplification switch (16, 18, 20) are integrated on an integrated circuit.

3. An optical detector according to claim 1 or 2, wherein the amplification of the readout amplifier (60) can be switched by switching capacitors (68, 70, 72) with different capacitances into the feedback path of the readout amplifier (60).

4. An optical detector according to one of the claims 1 - 3, wherein the amplification switch comprises an analog/digital converter (16; 82, 84) and a coder (18; 80) and where the coder (18; 80) effects the switching of the amplification of the readout amplifier (14; 60).

5. A method for detecting an optical signal, comprising the steps of:
converting the optical signal into an electrical signal by means of an image sensor element (10);
comparing the electrical signal with at least one given threshold value (86, 88);
switching the amplification of a readout amplifier (14; 60) between a plurality of amplification stages depending on the result of the comparison;
amplifying the electrical signal according to the amplification stage to which the amplifier is switched to generate an amplified electrical signal; and
outputting a first output signal indicating the amplified electrical signal and a second output signal indicating the amplification stage to which the amplifier is switched.

6. A method according to claim 5, wherein, with decreasing electrical signals generated by the image sensor element (10), the amplifier is switched to amplification stages having a higher amplification.

## Revendications

1. Dispositif de détection optique, aux caractéristiques suivantes :
au moins un élément capteur d'image (10) générant un signal de sortie d'élément capteur d'image en fonction d'un éclairage (12) incident sur ce dernier ;
un amplificateur de sortie (14 ; 60) commutable, pour le ou chaque élément capteur d'image (10), entre une pluralité de paliers d'amplification, pour l'amplification du signal de sortie d'élément capteur d'image correspondant ;
un dispositif de commutation d'amplification (16 ; 18 ; 20) destiné à comparer le signal de sortie d'élément capteur d'image, avant l'amplification de ce dernier par l'amplificateur de sortie (14 ; 60), avec au moins une valeur de seuil prédéterminée (86, 88) et à commuter entre les paliers d'amplification de l'amplificateur de sortie (14 ; 60) en fonction du résultat de la comparaison ; et
un premier signal de sortie (24 ; 100) représentant le signal de sortie d'élément capteur d'image et un second signal de sortie (22 ; 102, 104) indiquant le palier d'amplification sur lequel est commuté l'amplificateur.

2. Dispositif de détection optique suivant la revendication 1, dans lequel l'élément capteur d'image (10), l'amplificateur de sortie (14 ; 60) et le dispositif de commutation d'amplification (16 ; 18 ; 20) sont intégrés dans un circuit intégré.

3. Dispositif de détection optique suivant la revendication 1 ou 2, dans lequel l'amplification de l'amplificateur de lecture peut être commutée en enclenchant des condensateurs (68 ; 70 ; 72) à valeurs de capacité différentes sur le trajet de couplage réactif de l'amplificateur de lecture (60).

4. Dispositif de détection optique suivant l'une des revendications 1 à 3, dans lequel le dispositif de commutation d'amplification présente un convertisseur analogique/numérique (16 ; 82, 84) et un dispositif codeur (18 ; 80), le dispositif codeur (18 ; 80) provoquant la commutation de l'amplification de l'amplificateur de sortie (14 ; 60).

5. Procédé pour détecter un signal optique, aux étapes suivantes consistant à :
convertir le signal optique en un signal électrique à l'aide d'un élément capteur d'image (10);
comparer le signal électrique avec au moins une valeur de seuil (86 ; 88) ;
commuter l'amplification d'un amplificateur de sortie (14 ; 60) entre une pluralité de paliers d'amplification en fonction du résultat de la comparaison ;
amplifier le signal électrique en fonction du palier d'amplification sur lequel il est commuté, afin de générer un signal électrique amplifié ; et
sortir un premier signal de sortie (24 ; 100) représentant le signal électrique amplifié, et un second signal de sortie (22 ; 102, 104) indiquant le palier d'amplification sur lequel l'amplificateur est commuté.

6. Procédé suivant la revendication 5, dans lequel il est commuté, par des signaux électriques décroissants générés par l'élément capteur d'image (10), sur des paliers d'amplification à amplification supérieure.
